# EUROPÄISCHE PATENTANMELDUNG

(11) **EP 4 427 980 A1**
(43) Veröffentlichungstag der Anmeldung: **11.09.2024**
(21) Anmeldenummer: 23161295.3
(22) Anmeldetag: 10.03.2023
(51) Int. Cl.: B60P 7/06, B60P 7/08

(54) **NACHSPANNEINRICHTUNG UND VERFAHREN ZUR LADUNGSSICHERUNG**

(71) Anmelder: Schmitz Cargobull AG, 48341 Altenberge (DE)
(72) Erfinder: KISFELD, Franz-Josef, 48691 Vreden (DE)
(74) Vertreter: Cohausz & Florack

(57) **Zusammenfassung**

Beschrieben und dargestellt ist eine Nachspanneinrichtung (1,20) zur Ladungssicherung an einem Nutzfahrzeug (N), insbesondere Lastkraftwagen, Anhänger oder Sattelauflieger, mit einer Ladungssicherungsvorrichtung (8,31), insbesondere Spanngurt, mit einem Grundkörper (5,22), einem Zugkörper (7,21) und einer sich wenigstens indirekt gegenüber dem Grundkörper (5,22) und den Zugkörper (7,21) abstützenden Federeinrichtung (12,23), wobei der Zugkörper (7,21) gegenüber dem Grundköper (5,22) von wenigstens einer Spannstellung der Nachspanneinrichtung (1,20) entgegen einer Richtung der Rückstellkraft (RK) der Federeinrichtung (12,23) unter Verlängerung der Nachspanneinrichtung (1,20) ausziehbar und von wenigstens einer Nachspannstellung der Nachspanneinrichtung (1,20) in Richtung der Rückstellkraft (RK) der Federeinrichtung (12,23) unter Verkürzung der Nachspanneinrichtung (1,20) zurück einziehbar vorgesehen ist. Damit sich die gesicherte Ladung weniger leicht versehentlich lösen kann, ist vorgesehen, dass der Zugkörper (7,21) in der wenigstens einen Nachspannstellung gegenüber einem weiteren Ausziehen relativ zum Grundkörper (5,22) entgegen der Richtung der Rückstellkraft (RK) der Federeinrichtung (12,23) formschlüssig und/oder kraftschlüssig gesichert ist.

## Beschreibung

Die Erfindung betrifft eine Nachspanneinrichtung zur Ladungssicherung an einem Nutzfahrzeug, insbesondere Lastkraftwagen, Anhänger oder Sattelauflieger, mit einer Ladungssicherungsvorrichtung, insbesondere Spanngurt, mit einem Grundkörper, einem Zugkörper und einer sich wenigstens indirekt gegenüber dem Grundkörper und den Zugkörper abstützenden Federeinrichtung, wobei der Zugkörper gegenüber dem Grundkörper von wenigstens einer Spannstellung der Nachspanneinrichtung entgegen einer Richtung der Rückstellkraft der Federeinrichtung unter Verlängerung der Nachspanneinrichtung ausziehbar und von wenigstens einer Nachspannstellung in Richtung der Rückstellkraft der Federeinrichtung unter Verkürzung der Nachspanneinrichtung zurück einziehbar vorgesehen ist. Ferner betrifft die Erfindung ein Verfahren zur Ladungssicherung an einem Nutzfahrzeug, insbesondere Lastkraftwagen, Anhänger oder Sattelauflieger, unter Verwendung einer solchen Nachspanneinrichtung.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Die Nutzfahrzeuge können Planenaufbauten aufweisen, die wenigstens eine Plane zum Verschließen wenigstens einer Seite und/oder eines Dachs des Planenaufbaus aufweisen. Wenn eine Plane entlang einer Seitenwand des Planenaufbaus verschoben werden kann, spricht man auch von sogenannten Curtainsidern. Im Gegensatz dazu sind bei sogenannten Kofferaufbauten die Seitenwände und das Dach des Kofferaufbaus durch feste Wände verschlossen. Zudem ist am Kofferaufbau rückwärtig ein Türrahmen in Form eines Rückwandrahmens vorgesehen, an dem zwei Türen in Form von Rückwandtüren gehalten und in dem in der geschlossenen Stellung der Türen die Türen aufgenommen sein können.

Gegenüber dem Rückwandrahmen ist eine Stirnwand vorgesehen. Dabei können entsprechende Stirnwände und Rückwände in gleicher Weise bei Planenaufbauten und bei Kofferaufbauten vorgesehen sein. Andere Arten von Nutzfahrzeugen haben beispielsweise niedrige, typischerweise schwenkbare, Ladebordwände oder ausschließlich einen Ladeboden zum Aufstellen von Ladung. Unabhängig von der konkreten Ausgestaltung des Nutzfahrzeugs muss die zu transportierende Ladung regelmäßig auf dem Ladeboden gesichert werden, wozu es am Markt verfügbare Ladungssicherungsvorrichtungen gibt.

Derartige Ladungssicherungsvorrichtungen sind beispielsweise sogenannte Spanngurte mit zwei Gurtabschnitten, welche endseitig jeweils einen Haken aufweisen, und einem die Gurtabschnitte verbindenden Spannmittel, welches meist nach Art einer Ratsche ausgeführt ist. Es kommen aber auch Ketten zur Anwendung, die mit einem Kettenspanner verbunden sind. Durch das Spannen der Ladungssicherungsvorrichtung soll verhindert werden, dass die Ladung auf dem Ladeboden verrutscht und sich die Ladung somitaus der vorbestimmten Ladeposition auf dem Ladeboden verschiebt. Gleichzeitig sind die durch die Ladungssicherungsvorrichtung aufzubringenden Spannkräfte limitiert, so dass ein Verrutschen der Ladung nicht in jedem Fall verhindert werden kann. Sofern die Ladung verrutscht, kann es passieren, dass die Ladungssicherungsvorrichtung nicht mehr gegenüber der Ladung und dem Ladeboden abgespannt ist, sondern sich nur noch schlaff von einem zum anderen Ende der Ladungssicherungsvorrichtung erstreckt. Die Ladungssicherungsvorrichtung trägt dann je nach Art der Ladung und deren ursprünglicher Sicherung nicht mehr zur Ladungssicherung bei oder eröffnet die Möglichkeit, dass die Ladungssicherungsvorrichtung ganz oder teilweise von der Ladung herunterrutscht und dann allenfalls bedingt zur Ladungssicherung beiträgt.

Um die vorstehenden Probleme zu adressieren, sind bereits Nachspanneinrichtungen für Ladungssicherungsvorrichtungen vorgeschlagen worden, die einen Grundkörper, einen Zugkörper und wenigstens eine zwischen dem Grundkörper und dem Zugkörper vorgesehene Federeinrichtung umfassen. Dabei ist die Federeinrichtung so vorgesehen, dass sich die Federeinrichtung wenigstens in einer Spannstellung und wenigstens indirekt gegenüber dem Grundkörper und dem Zugkörper abstützt. Die Nachspanneinrichtung wird einerseits mit dem Nutzfahrzeug und andererseits mit einer Ladungssicherungsvorrichtung verbunden. Wird die Ladungssicherungsvorrichtung zur Ladungssicherung in einer Spannstellung gegenüber der Ladung abgespannt, so wird der Zugkörper der Nachspanneinrichtung gegenüber dem Grundkörper der Nachspanneinrichtung ausgezogen und die Federeinrichtung gleichzeitig gespannt. Der Zugkörper wird dann mithin entgegen der Richtung der Rückstellkraft der Federeinrichtung gegenüber dem Grundkörper verstellt, wobei sich die Nachspanneinrichtung längt, jedenfalls wenn die Ladungssicherungsvorrichtung unter einer hinreichenden Zugspannung steht. Der Zugkörper wird beim Spannen der Ladungssicherungsvorrichtung hinreichend weit gegenüber dem Grundkörper ausgezogen und gelangt damit in eine Nachspannstellung. Wenn nun die Ladung verrutschen sollte, kann der Zugkörper in der Richtung der Rückstellkraft der Federeinrichtung wieder gegenüber dem Grundkörper eingezogen werden. Dabei verkürzt sich die Nachspanneinrichtung so weit, dass die Ladungssicherungsvorrichtung stramm an der verrutschten Ladung anliegt, die mithin weiter hinreichend gesichert ist. Ein Verrutschen kann aber durch die Nachspanneinrichtung nicht grundsätzlich verhindert werden, so dass es trotz der Nachspannfunktion der Nachspanneinrichtung zu einem unerwünschten Lösen der Ladungssicherungsvorrichtung von Ladung kommen kann. Eine solche Nachspanneinrichtung ist beispielsweise aus der WO 2006/098681 A1 bekannt.

Daher liegt der vorliegenden Erfindung die Aufgabe zugrunde, die Nachspanneinrichtung und das Verfahren jeweils der eingangs genannten und zuvor näher beschriebenen Art derart auszugestalten und weiterzubilden, dass sich gesicherte Ladung weniger leicht versehentlich lösen kann.

Diese Aufgabe ist bei einer Nachspanneinrichtung nach dem Oberbegriff des Anspruchs 1 dadurch gelöst, dass der Zugkörper in der wenigstens einen Nachspannstellung gegenüber einem weiteren Ausziehen relativ zum Grundkörper entgegen der Richtung der Rückstellkraft der Federeinrichtung formschlüssig und/oder kraftschlüssig gesichert ist.

Die genannte Aufgabe ist ferner gemäß Anspruch 9 gelöst durch ein Verfahren zur Ladungssicherung an einem Nutzfahrzeug, insbesondere Lastkraftwagen, Anhänger oder Sattelauflieger, unter Verwendung einer Nachspanneinrichtung nach einem der Ansprüche 1 bis 8,
- bei dem der Grundkörper der Nachspanneinrichtung direkt oder indirekt mit dem Nutzfahrzeug verbunden wird,
- bei dem in der Spannstellung der Nachspanneinrichtung eine an dem Zugkörper festgelegte Ladungssicherungsvorrichtung unter Sicherung einer Ladung an dem Nutzfahrzeug derart gespannt wird, dass der Zugkörper gegenüber dem Grundkörper unter Verlängerung der Nachspanneinrichtung in einer Richtung entgegen der Rückstellkraft der Federeinrichtung ausgezogen wird und
- bei dem die Nachspanneinrichtung in eine Nachspannstellung gebracht wird, in der ein weiteres Ausziehen des Zugkörpers gegenüber dem Grundkörper unter Verlängerung der Nachspanneinrichtung blockiert und ein Einziehen des Zugkörpers gegenüber dem Grundkörper unter Verkürzung der Nachspanneinrichtung freigegeben ist.

Wenn die Nachspanneinrichtung sich in der wenigstens einen Nachspannstellung befindet, ist ein weiteres Ausziehen des Zugkörpers gegenüber dem Grundkörper in eine Verstellrichtung entgegen der Rückstellkraft der Federeinrichtung blockiert, und zwar infolge eines Formschlusses und/oder eines Kraftschlusses. In dieser Verstellrichtung ist der Zugkörper in der Nachspannstellung mithin gegen ein weiteres Ausziehen gesichert. Dies bedeutet folglich, dass die Ladung keine Kraft mehr auf die Nachspanneinrichtung ausüben kann, die zu einem Längen der Nachspanneinrichtung führt. Ein solches Längen, auch wenn dies nur kurzzeitig der Fall wäre und später durch das Nachspannen der Nachspanneinrichtung ausgeglichen würde, könnte zu einem Verrutschen der Ladung führen. Die Ladung wäre dann nicht zwingend ungesichert oder lose, obwohl auch das möglich wäre, aber würde ihre Position in Bezug auf das Nutzfahrzeug verändern. Dadurch kann andere Ladung beschädigt oder der Platz für die Aufnahme weiterer Ladung blockiert werden. Auch wäre es denkbar, dass die Ladung seitlich gegenüber dem Nutzfahrzeug übersteht, was zu einer Gefährdung führen könnte und daher in vielen Fällen genehmigungsrechtlich untersagt ist. Auch kann das Nutzfahrzeug durch eine verrutschte und somit ungleichmäßig auf dem Ladeboden verteilte Ladung in eine unerwünschte Schieflage geraten.

Unabhängig davon ist ein Nachspannen durch das Verstellen der Nachspanneinrichtung in die wenigstens eine Nachspannstellung nicht behindert. Der Zugkörper kann auch in der Nachspannstellung in Richtung der Rückstellrichtung der Federeinrichtung gegenüber dem Grundkörper eingezogen werden und dabei die Länge der Nachspanneinrichtung verringern.

Die Ladungssicherung an einem Nutzfahrzeug kann also unter Verwendung einer entsprechenden Nachspanneinrichtung einfach und zuverlässig erfolgen, indem der Grundkörper der Nachspanneinrichtung mit dem Nutzfahrzeug verbunden wird. Dies kann beispielsweise direkt erfolgen, in dem der Grundkörper der Nachspanneinrichtung in einer Aufnahme des Nutzfahrzeugs eingehakt oder eingehängt wird. Der Grundkörper kann aber auch etwa zur vereinfachten Verbindung der Nachspanneinrichtung mit dem Nutzfahrzeug mit einem einen Haken aufweisenden Gurt verbunden sein. Der Gurt kann dann mit dem Haken in eine Aufnahme des Nutzfahrzeugs eingehakt werden, um den Grundkörper indirekt mit dem Nutzfahrzeug zu verbinden. Andere Arten der Verbindung von Grundkörper und Nutzfahrzeug sind ebenfalls möglich.

Der Zugkörper der Nachspanneinrichtung wird bevorzugt bereits mit einer Ladungssicherungsvorrichtung verbunden sein. Denkbar wäre aber auch, dass der Zugkörper vor der Ladungssicherung erst mit der Ladungssicherungsvorrichtung verbunden wird. Die Ladungssicherungsvorrichtung kann dann mit der Nachspanneinrichtung in einer Spannstellung gespannt werden, und zwar insbesondere entlang der zu sichernden Ladung. Das Spannen der Ladungssicherungsvorrichtung dient der Sicherung der Ladung gegenüber dem Nutzfahrzeug. Dabei wird der Zugkörper gegenüber dem Grundkörper unter Verlängerung der Nachspanneinrichtung in einer Richtung entgegen der Rückstellkraft der Federeinrichtung ausgezogen. Die Ladungssicherungsvorrichtung wird dabei vorab bevorzugt an dem Nutzfahrzeug festgelegt, wozu die Ladungssicherungsvorrichtung beispielsweise endseitig mindestens einen Haken aufweisen kann, der sich in eine Aufnahme des Nutzfahrzeugs einhängen lässt. Ob zunächst der Grundkörper oder zunächst der Zugkörper der Nachspanneinrichtung mit dem Nutzfahrzeug verbunden wird, spielt grundsätzlich eine untergeordnete Rolle. Die Nachspanneinrichtung wird zudem in eine Nachspannstellung gebracht, in welcher ein weiteres Ausziehen des Zugkörpers gegenüber dem Grundkörper unter Verlängerung der Nachspanneinrichtung blockiert ist. Das Einziehen des Zugkörpers gegenüber dem Grundkörper unter Verkürzung der Nachspanneinrichtung bleibt in der Nachspannstellung jedoch freigegeben. Wenn jetzt größere Kräfte auf die Ladung wirken, kann sich die Nachspanneinrichtung nicht weiter längen und ein Verschieben der Ladung somit nicht ermöglichen. Die Nachspanneinrichtung kann aber dennoch für ein Nachspannen und Verkürzen der Nachspanneinrichtung sorgen.

Dies kann zweckmäßig sein, wenn sich die Ladung versehentlich ohne ein Längen der Nachspanneinrichtung verschoben haben sollte, um zu verhindern, dass die Zugspannung der Ladungssicherungsvorrichtung übermäßig abnimmt oder dass die Ladungssicherungsvorrichtung lediglich schlaff um die Ladung herum geführt bleibt. Ein Nachspannen der Nachspanneinrichtung kann auch dann vorteilhaft sein, wenn etwa die Ladung komprimiert wurde oder anderweitig ihre Form geändert hat. Dies wäre beispielsweise denkbar, wenn mit Schüttgut gefüllte Säcke gegen Verrutschen gesichert werden sollen. Das Schüttgut kann sich dann in den Säcken bewegen und so ein Nachspannen erforderlich machen bzw. auslösen.

Je nach der konkret vorgesehenen Verwendung der Nachspanneinrichtung können unterschiedliche Nachspannstellungen und/oder Spannstellungen vorgesehen sein. Diese können sich dabei beispielsweise dahingehend unterscheiden, wie weit der Zugkörper gegenüber dem Grundkörper entgegen der Richtung der Rückstellkraft der Federeinrichtung ausgezogen ist. Unter Umständen kann der Bediener die Nachspanneinrichtung wahlweise in unterschiedlichen Stellungen des Zugkörpers relativ zum Grundkörper aus einer Spannstellung in eine Nachspannstellung verstellen.

Unter einer Federeinrichtung kann vorliegend eine Einrichtung verstanden werden, die eine Rückstellkraft in der beschriebenen Weise ausübt. Die Federeinrichtung bewirkt letztlich, dass der Zugkörper gegenüber dem Grundkörper unter Verlängerung der Nachspanneinrichtung in einer Richtung entgegen der Rückstellkraft der Federeinrichtung ausgezogen werden kann. Die Federeinrichtung kann in einem einfachen Fall durch eine Feder gegeben sein. Die Federeinrichtung kann aber auch eine Mehrzahl von Federn aufweisen. Als Feder kommt dabei auch aus Kostengründen insbesondere eine Schraubenfeder in Frage. Andere Federn sind aber ebenfalls denkbar. Anstelle einer Feder im eigentlichen Sinne kann auch wenigstens ein anderes, hinreichend elastisch verformbares Element, etwa eine Gummiblock, ein Gummiband oder dergleichen, verwendet werden. Die Federeinrichtung kann aber auch in anderer Weise die beschriebene Rückstellkraft bewirken, etwa durch Kompression eines Gases oder anderen kompressiblen Mediums. Dazu kann das kompressible Medium beispielsweise in einem Zylinder aufgenommen sein und zur Bereitstellung der Rückstellkraft durch einen Kolben komprimiert werden. Unabhängig von der Ausgestaltung der Federeinrichtung kann eine Feder, ein elastisches Element oder dergleichen zur Bereitstellung auf Zug oder auf Druck beansprucht werden. Eine Beanspruchung auf Zug wird dabei in vielen Fällen einfacher und daher zweckmäßiger sein. Es ist aber beispielsweise auch eine Belastung auf Druck, bedarfsweise mit einer Umlenkung zur Bereitstellung einer in die richtige Richtung weisenden Rückstellkraft, denkbar.

Der besseren Verständlichkeit halber und zur Vermeidung von unnötigen Wiederholungen werden die Nachspanneinrichtung und das Verfahren zu deren Anwendung nachfolgend gemeinsam beschrieben, ohne jeweils im Einzelnen zwischen der Nachspanneinrichtung und dem Verfahren zu unterscheiden. Für den Fachmann ergibt sich jedoch aus dem Kontext, welches Merkmal jeweils für die Nachspanneinrichtung und das Verfahren besonders bevorzugt ist.

Bei einer ersten besonders bevorzugten Ausgestaltung der Nachspanneinrichtung ist dem Grundkörper wenigstens ein Grundkörperanschlag und dem Zugkörper wenigstens ein korrespondierender Zugkörperanschlag zugeordnet. Durch diese Anschläge, die miteinander zusammenwirken, kann verhindert, werden, dass der Zugkörper gegenüber dem Grundkörper so weit ausgezogen wird, dass die Federeinrichtung übermäßig belastet wird oder Schaden nimmt. Zudem kann die Nachspanneinrichtung so in einer einfachen und zuverlässigen Art und Weise in eine Nachspannstellung überführt werden, aus der heraus kein weiteres Ausziehen des Zugkörpers gegenüber dem Grundkörper mehr möglich ist. Dies ist besonders zweckmäßig zu realisieren, wenn der wenigstens eine Grundköperanschlag und der wenigstens eine Zugkörperanschlag in der wenigstens einen Nachspannstellung wenigstens indirekt derart in Anlage aneinander gelangen, dass ein Ausziehen des Zugkörpers gegenüber dem Grundkörper entgegen der Rückstellkraft der Federeinrichtung formschlüssig blockiert ist.

Unter einer indirekten Anlage wird hierbei insbesondere eine solche verstanden, bei der zwischen dem Grundkörperanschlag und dem Zugkörperanschlag wenigstens ein Zwischenkörper vorgesehen ist, der sowohl in Anlage an dem Grundkörperanschlag als auch an dem Zugkörperanschlag ist und beide Anschläge auf einen konstanten Abstand hält, mithin zwischen den beiden Anschlägen vorgesehen ist und deren weitere Annäherung blockiert. Die Nachspanneinrichtung muss also nicht separat von der Spannstellung in die Nachspannstellung verstellt werden. Es kann vielmehr ausreichen, wenn die Nachspanneinrichtung hinreichend gespannt wird, so dass der Zugkörper so weit gegenüber dem Grundkörper ausgezogen wird, dass der Zugkörperanschlag wenigstens indirekt in Anlage an den Grundkörperanschlag gelangt und so ein weiteres Ausziehen des Zugkörpers gegenüber dem Grundkörper verhindert.

Alternativ oder zusätzlich kann der Grundkörper mit einem Montageabschnitt zum Montieren der Nachspanneinrichtung an einem Nutzfahrzeug verbunden sein. Der Montageabschnitt kann dabei der Einfachheit halber eine Öse, eine Buchse, ein Gewinde oder einen Haken aufweisen, um mit dem Nutzfahrzeug verbunden werden zu können. Unabhängig davon kann der Zugkörper mit einem Spannabschnitt zum Anbinden einer Ladungssicherungsvorrichtung verbunden sein. Es können dann beispielsweise bereits vorhandene, insbesondere gebräuchliche, Ladungssicherungsvorrichtungen zur Sicherung der Ladung genutzt werden.

Die Handhabung wird jedoch weiter vereinfacht, wenn mit dem Montageabschnitt des Grundkörpers wenigstens indirekt ein Haken zum Einhaken der Nachspanneinrichtung in eine Aufnahme eines Nutzfahrzeugs verbunden ist. Der Haken kann dabei indirekt beispielsweise über eine Kette, ein Seil oder ein Band mit dem Montageabschnitt des Grundkörpers verbunden sein. Der Grundkörper bzw. die Nachspanneinrichtung kann dann auf übliche und einfache Weise in eine Aufnahme des Nutzfahrzeugs eingehängt werden. Wenn der Spannabschnitt mit einer Ladungssicherungsvorrichtung in Form eines Spanngurtes oder mit einer eine Spanneinrichtung aufweisenden Kette verbunden ist, können übliche Spanngurte und Ketten zur Ladungssicherung genutzt werden, die vom Bediener zuverlässig verwendet werden können, ohne dass es einer zusätzlichen Schulung bedarf.

Alternativ oder zusätzlich zu wenigstens einem Grundkörperanschlag und wenigstens einem Zugkörperanschlag kann ein von einer Sperrstellung in wenigstens einer Nachspannstellung in eine Freigabestellung in wenigstens einer Spannstellung und zurück verstellbares Gesperre vorgesehen sein. So ist beispielsweise ein Verstellen der Nachspanneinrichtung von der Spannstellung in die Nachspannstellung möglich, ohne dass der Zugkörper vollständig bis zu einer wenigstens indirekten Anlage eines Zugkörperanschlags an einem Grundkörperanschlag ausgezogen werden muss.

Zudem kann bedarfsweise ein Ausziehen des Zugkörpers gegenüber dem Grundkörper unter Verlängerung der Nachspanneinrichtung in der Sperrstellung formschlüssig und/oder kraftschlüssig blockiert sein. Die Nachspanneinrichtung kann dann in der Freigabestellung des Gesperres gespannt und sodann das Gesperre in die Sperrstellung verstellt werden, um ein weiteres Ausziehen des Zugkörpers gegenüber dem Grundkörper in einer Richtung entgegen der Rückstellrichtung der Federeinrichtung zu verhindern. Ein Einziehen des Zugkörpers gegenüber dem Grundkörper unter Verkürzung der Nachspanneinrichtung kann in der Sperrstellung des Gesperres ebenso freigegeben sein, wie in der Freigabestellung des Gesperres. Dies kann die Ausgestaltung und die Handhabung der Nachspanneinrichtung vereinfachen.

Damit das Gesperre einfach und zuverlässig seine Funktion bewirken kann, ist es zweckmäßig, wenn das Gesperre wenigstens einen Nocken zum formschlüssigen und/oder kraftschlüssigen Verbinden des Grundkörpers und des Zugkörpers aufweist. Über den wenigstens einen Nocken kann dann sichergestellt werden, dass der Zugkörper in der Nachspannstellung nicht weiter gegenüber dem Grundkörper ausgezogen werden kann. Zudem kann die Nachspanneinrichtung in unterschiedliche Nachspannstellungen verstellt werden, in denen die Nachspanneinrichtung unterschiedliche Längen aufweist.

Besonders einfach und zweckmäßig ist dies zu erreichen, wenn der Zugkörper oder der Grundkörper eine Zahnstange aufweist und das Gesperre dazu ausgebildet ist, in unterschiedlichen Nachspannstellungen mit dem wenigstens einen Nocken in jeweils unterschiedliche Zähne in unterschiedlichen Abschnitten der Zahnstange formschlüssig einzugreifen. Dabei ergibt sich beispielsweise zwangsweise anhand des Maßes, in dem der Zugkörper gegenüber dem Grundkörper ausgezogen ist, in welchem Abschnitt der Zahnstange der wenigstens eine Nocken eingreift. Eine Fehlfunktion kann somit weitestgehend vermieden werden. Wenn der Zugkörper die Zahnstange aufweist, ist das Gesperre vorzugsweise Teil des Grundkörpers und umgekehrt.

Die Handhabung und die Funktion des Gesperres kann zudem vereinfacht werden, wenn das Gesperre wenigstens ein Federelement zum Federbelasten des wenigstens einen Nockens in wenigstens einer Spannstellung und/oder in wenigstens einer Nachspannstellung aufweist. Das wenigstens eine Federelement kann dafür sorgen, dass der wenigstens eine Nocken in der Sperrstellung oder der Freigabestellung des Gesperres gehalten ist. Das Verstellen des Gesperres in die jeweils andere Stellung kann dann gegen die Federkraft des wenigstens einen Federelements erfolgen. Ein versehentliches Verstellen des Gesperres in die entsprechende andere Stellung kann so verhindert werden.

Besonders bevorzugt ist es in diesem Zusammenhang, wenn der wenigstens eine Nocken wenigstens in der Nachspannstellung infolge der Federkraft des Federelements den Grundkörper und den Zugkörper formschlüssig und/oder kraftschlüssig entgegen der Rückstellkraft der Federeinrichtung miteinander verbindet. So wird sichergestellt, dass sich die Nachspanneinrichtung nicht versehentlich aus der Nachspannstellung in die Spannstellung verstellen und so ein versehentliches Lockern der Ladungssicherungsvorrichtung und somit ein Verschieben der Ladung ermöglichen kann.

Für ein einfaches und zuverlässiges Verstellen der Nachspanneinrichtung können wenigstens einige Zähne der Zahnstange derart ausgebildet und/oder ausgerichtet sein, so dass der wenigstens eine Nocken beim Einziehen des Zugkörpers gegenüber dem Grundkörper in der Sperrstellung des Gesperres und der Nachspannstellung der Nachspanneinrichtung an den Flanken der entsprechenden Zähnen abgleitet. Der wenigstens eine Nocken blockiert letztlich durch ein Eingreifen in die Zahnstange ein Ausziehen des Zugkörpers gegenüber dem Grundkörper in einer Richtung entgegen der Rückstellkraft der Federeinrichtung, kann aber ein Einziehen des Zugkörpers gegenüber dem Grundkörper ermöglichen, in dem der wenigstens eine Nocken an den Zähnen der Zahnstange abgleitet. Fehlfunktionen können dabei vermieden werden, wenn der wenigstens eine Nocken beim Abgleiten an den Zähnen der Zahnstange entgegen der Federkraft des Federelements des Gesperres unter Freigabe der Zahnstange ausgelenkt wird. Wenigstens ein Zahn der Zahnstange kann den wenigstens einen Nocken also entgegen der Federkraft des Federelements auslenken, so dass der wenigstens eine Nocken an den wenigstens einen Zahn unter zeitweiser Freigabe der Zahnstange abgleitet. Nach dem Abgleiten an den Zähnen der Zahnstange kann der wenigstens eine Nocken dann jeweils wieder in Richtung der Federkraft des Federelements in einen erneuten formschlüssigen und/oder kraftschlüssigen Eingriff mit der Zahnstange gebracht werden. So wird weiter sichergestellt, dass ein Ausziehen des Zugkörpers gegenüber dem Grundkörper verhindert ist, und zwar auch in der etwas weiter eingezogenen Stellung des Zugkörpers gegenüber dem Grundkörper.

Bei einer ersten besonders bevorzugten Ausgestaltung des Verfahrens wird die Nachspanneinrichtung durch bloßes Ausziehen des Zugkörpers gegenüber dem Grundkörper entgegen der Richtung der Rückstellkraft der Federeinrichtung in die Nachspannstellung gebracht. Dies lässt sich auf besonders einfache Art erreichen, wenn die Nachspanneinrichtung durch Ausziehen des Zugkörpers gegenüber dem Grundkörper entgegen der Richtung der Rückstellkraft der Federeinrichtung bis zu einer wenigstens indirekten Anlage eines Grundköperanschlags und eines Zugkörperanschlags verstellt wird. Ob die Anschläge dabei direkt aneinander anliegen oder sich wenigstens ein Zwischenkörper formschlüssig zwischen den Anlagen befindet, ist dabei funktional von untergeordneter Bedeutung.

Die Nachspanneinrichtung kann alternativ oder zusätzlich durch Verstellen eines Gesperres von der Freigabestellung in die Sperrstellung gebracht werden, insbesondere um auf diese Weise ein Verstellen der Nachspanneinrichtung von der Spannstellung definiert in die Nachspannstellung zu überführen. Um eine zuverlässige Nachspannstellung bereitzustellen, kann beim Verstellen des Gesperres in die Sperrstellung wenigstens ein Nocken den Grundkörper und den Zugkörper formschlüssig und/oder kraftschlüssig miteinander verbinden. Auf diese Weise wird dann der Zugkörper gegenüber einem Ausziehen gegenüber dem Grundkörper entgegen der Richtung der Rückstellkraft der Federeinrichtung blockiert. Die Nachspanneinrichtung kann sich so nicht ungewollt durch weiteres Ausziehen des Zugkörpers gegenüber dem Grundkörper längen.

Zum einfachen und zuverlässigen Etablieren einer Sperrstellung bzw. einer Nachspannstellung kann beim Verstellen des Gesperres in die Sperrstellung der wenigstens eine Nocken abschnittweise formschlüssig in eine Zahnstange des Zugkörpers oder des Grundkörpers eingreifen. Wenn der wenigstens eine Nocken in unterschiedliche Abschnitte der Zahnstange eingreift, je nachdem wie weit der Zugkörper jeweils gegenüber dem Grundkörper ausgezogen ist, können einfach unterschiedliche Nachspannstellungen bei unterschiedlichen Längen der Nachspanneinrichtung geschaffen werden. Wenn der Zugkörper die Zahnstange aufweist, ist das Gesperre vorzugsweise Teil des Grundkörpers und umgekehrt.

Um die Ladungssicherung einfach aufheben zu können, etwa um die Ladung zu entladen oder weitere Ladung aufzunehmen, kann das Gesperre der Einfachheit halber von der Sperrstellung in die Freigabestellung verstellt werden. Dies kann in einfacher Weise händisch von einem Bediener erfolgen. Gleiches gilt der Einfachheit halber bedarfsweise auch für das Verstellen des Gesperres von der Freigabestellung in die Sperrstellung.

Zur sicheren und zuverlässigen Handhabung der Nachspanneinrichtung kann der wenigstens eine Nocken des Gesperres entgegen einer Federkraft wenigstens eines Federelements von der Sperrstellung in die Freigabestellung verstellt werden. Das Verstellen in die Freigabestellung wird mithin nicht ohne Weiters versehentlich erfolgen können. Alternativ oder zusätzlich wird der wenigstens eine Nocken des Gesperres in Richtung einer Federkraft wenigstens eines Federelements von der Freigabestellung in die Sperrstellung verstellt. So wird das Gesperre einfach zuverlässig in der Sperrstellung gehalten, ohne dass dieses Verstellen durch einen besonderen separaten händischen Eingriff des Bedieners bewirkt werden müsste.

Die Ladungssicherungsvorrichtung kann unter Aufhebung der Sicherung der Ladung an dem Nutzfahrzeug entspannt werden. Dies erlaubt es in einfacher und schneller Weise die Ladung zu entladen oder an einer anderen Stelle erneut zu sichern. Besonders zweckmäßig ist es dann, wenn während des Entspannens der Ladungssicherungsvorrichtung der Zugkörper unter Verkürzung der Nachspanneinrichtung in Richtung der Rückstellkraft der Federeinrichtung gegenüber dem Grundkörper eingezogen wird. Die Nachspanneinrichtung ist dann unmittelbar für eine erneute Ladungssicherung einsetzbar.

Für ein schnelles erneutes Verwenden der Nachspanneinrichtung kann alternativ oder zusätzlich das Gesperre von der Sperrstellung in die Freigabestellung verstellt werden. In dieser Stellung ist dann das Ausziehen des Zugkörpers gegenüber dem Grundkörper entgegen der Richtung der Rückstellkraft der Federeinrichtung unter Längung der Nachspanneinrichtung möglich, um eine andere Ladung mit der Ladungssicherungsvorrichtung zu sichern.

Für ein einfaches und zuverlässiges Verstellen der Nachspanneinrichtung können wenigstens einige Zähne der Zahnstange derart ausgebildet und/oder ausgerichtet sein, so dass der wenigstens eine Nocken beim Einziehen des Zugkörpers gegenüber dem Grundkörper in der Sperrstellung des Gesperres und der Nachspannstellung der Nachspanneinrichtung an den entsprechenden Zähnen abgleitet. Der wenigstens eine Nocken blockiert letztlich durch Eingreifen in die Zahnstange ein Ausziehen des Zugkörpers gegenüber dem Grundkörper in einer Richtung entgegen der Rückstellkraft der Federeinrichtung, kann aber ein Einziehen des Zugkörpers gegenüber dem Grundkörper ermöglichen, in dem der wenigstens eine Nocken an Zähnen der Zahnstange abgleitet. Fehlfunktionen können dabei vermieden werden, wenn der wenigstens eine Nocken beim Abgleiten an den Zähnen der Zahnstange entgegen der Federkraft des Federelements des Gesperres unter Freigabe der Zahnstange ausgelenkt wird. Wenigstens ein Zahn der Zahnstange kann den wenigstens einen Nocken also entgegen der Federkraft des Federelements derart auslenken, so dass der wenigstens eine Nocken an dem wenigstens einen Zahn unter zeitweiser Freigabe der Zahnstange abgleitet. Nach dem Abgleiten an den Zähnen der Zahnstange kann der wenigstens eine Nocken dann jeweils wieder in Richtung der Federkraft des Federelements in einen erneuten formschlüssigen und/oder kraftschlüssigen Eingriff mit der Zahnstange gebracht werden. So wird weiter sichergestellt, dass ein Ausziehen des Zugkörpers gegenüber dem Grundkörper verhindert ist, und zwar auch in der etwas weiter eingezogenen Stellung des Zugkörpers gegenüber dem Grundkörper.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einer mittels einer erfindungsgemäßen Nachspanneinrichtung gesicherten Ladung in einer schematischen, perspektivischen Ansicht,
- Fig. 2: die Sicherung der Ladung mit der Nachspanneinrichtung gemäß Fig. 1 in einem Detail in einer schematischen Schnittansicht quer zum Nutzfahrzeug der Fig. 1,
- Fig. 3A-E: ein Detail der Nachspanneinrichtung aus der Fig. 2 in einer Spannstellung in einer perspektivischen Detaildarstellung, in einer Spannstellung in einer Schnittdarstellung und in einer Nachspannstellung in einer Schnittansicht und
- Fig. 4A-E: ein Detail einer alternativen Nachspanneinrichtung in einer Spannstellung in einer perspektivischen Detaildarstellung und einer Schnittdarstellung sowie in einer Nachspannstellung in einer perspektivischen Detaildarstellung und in einer Schnittansicht.

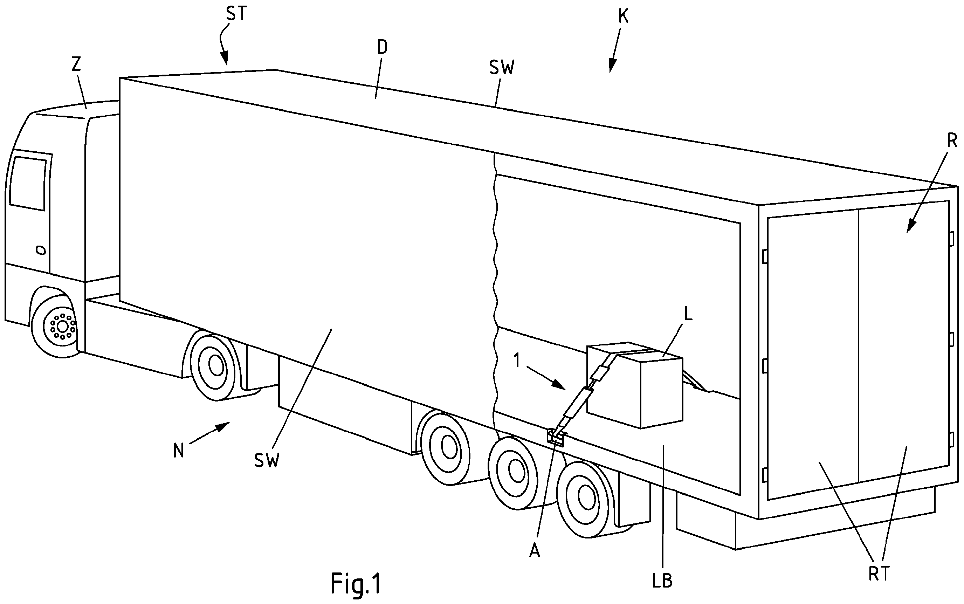

In der Fig. 1 ist ein von einem Zugfahrzeug Z gezogenes Nutzfahrzeug N in Form eines Sattelaufliegers mit einem Kofferaufbau K dargestellt. Der Kofferaufbau K umfasst ein festes Dach D, eine feste Stirnwand ST, feste Seitenwände SW und eine Rückwand R mit festen Rückwandtüren RT. Ein Teil der vorderen Seitenwand SW ist in der Fig. 1 weggelassen worden, so dass man in den Kofferaufbau K sehen kann, wo eine Ladung L auf dem Ladeboden LB des Kofferaufbaus K gestellt und dort mit einer Nachspanneinrichtung 1 gegenüber einem Verrutschen gesichert ist.

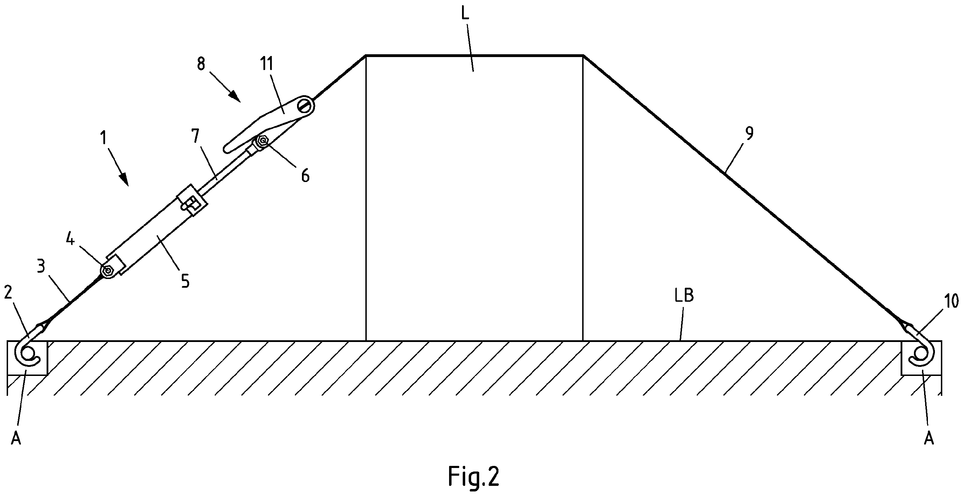

In der Fig. 2 ist die Sicherung der Ladung L mit der Nachspanneinrichtung 1 im Detail in einer Schnittansicht dargestellt. Die Ladung L steht etwa mittig auf dem Ladeboden LB des Nutzfahrzeugs N. An der links dargestellten Seite des Ladebodens LB ist die Nachspanneinrichtung 1 mit einem Haken 2 in eine Aufnahme A des Ladebodens LB eingehängt, wobei der Haken 2 über einen Gurt 3 fest mit einem Montageabschnitt 4 eines Grundkörpers 5 der Nachspanneinrichtung 1 verbunden ist. An einem Spannabschnitt 6 eines Zugkörpers 7 ist eine Ladungssicherungsvorrichtung 8 in Form eines Spanngurts festgelegt. Die Ladungssicherungsvorrichtung 8 umfasst dabei einen Gurt 9, der an einem Ende einen Haken 10 trägt, mit dem die Ladungssicherungsvorrichtung 8 in eine Aufnahme A an der rechts dargestellten Seite des Ladebodens LB eingehängt ist. An der gegenüberliegenden Seite der Ladungssicherungsvorrichtung 8 ist ein Spannmittel 11 in Form einer Ratsche mit dem Gurt 9 verbunden, die als solche vielfach bei Ladungssicherungsvorrichtungen eingesetzt wird. Das Spannmittel 11 erlaubt es, die Ladungssicherungsvorrichtung 8, insbesondere den Gurt 9 der Ladungssicherungsvorrichtung 8, entlang der Ladung L abzuspannen, um diese auf dem Ladeboden LB zu verzurren.

In der Fig. 2 ist lediglich ein Beispiel einer Ladungssicherung dargestellt. Die Ladung L könnte auch auf eine andere Art gesichert werden. Beispielsweise könnte die Nachspanneinrichtung 1 auch längs anstatt quer zum Nutzfahrzeug N verlaufen oder mit anderen Hilfsmitteln verwendet werden. Denkbar wäre beispielsweise auch, dass die Ladung L in einer horizontalen Ebene an der Stirnwand ST festgezurrt wird. Die verschiedenen Arten der Ladungssicherung unter Verwendung eines spannbaren Gurts oder einer spannbaren Kette sind grundsätzlich bekannt und können grundsätzlich auch unter Verwendung einer Nachspanneinrichtung bereitgestellt werden. Dabei könnten anstelle der Gurte 3,9 auch Ketten eingesetzt werden, wobei dann wenigstens eine Kette mittels eines Kettenspanners abgespannt werden kann. Die Ketten können an ihren Enden wiederum Haken für ein einfaches Verbinden der Nachspanneinrichtung mit dem Nutzfahrzeug N aufweisen. Es könnte aber auch unabhängig von Gurten oder Ketten auf Haken verzichtet werden, solange Mittel vorgesehen sind, um die gegenüberliegenden Enden der Nachspanneinrichtung mit dem Nutzfahrzeug N so verbinden zu können, dass ein Abspannen der Nachspanneinrichtung zum Zwecke der Ladungssicherung möglich ist.

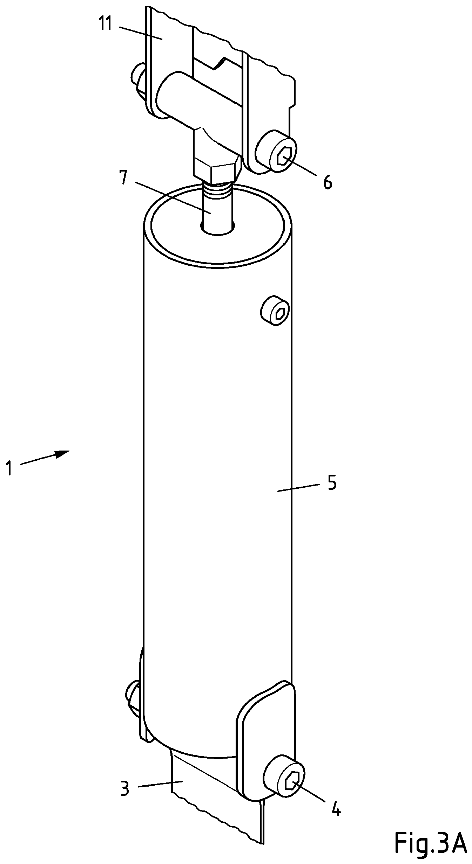

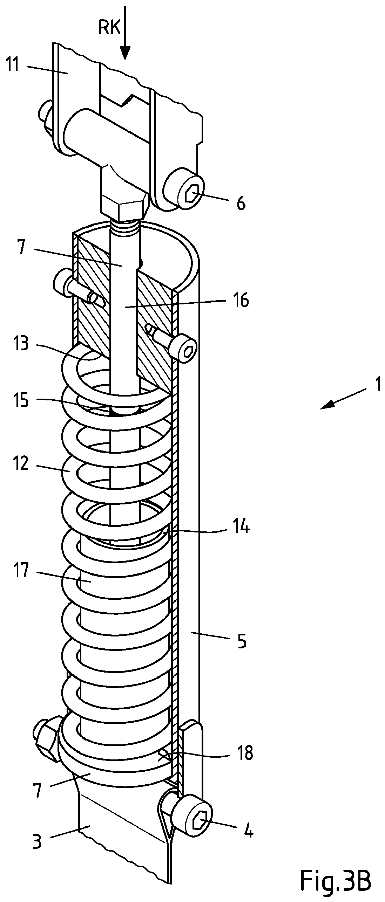

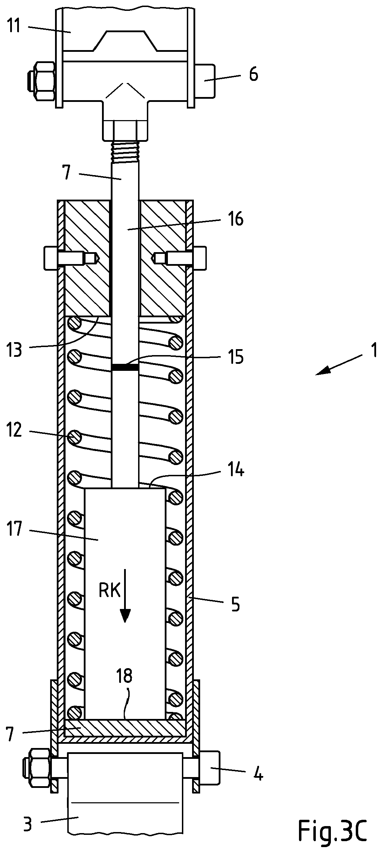

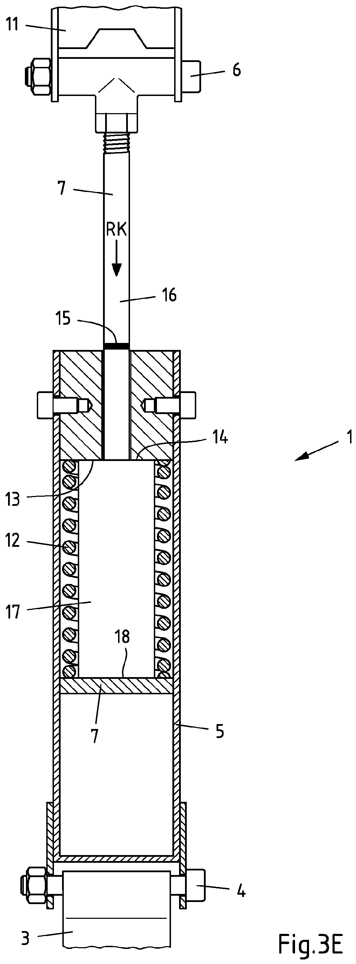

In den Fig. 3A-E ist ein Detail der Nachspanneinrichtung 1 aus der Fig. 2 dargestellt. Die Nachspanneinrichtung 1 weist einen Grundkörper 5 auf, der bei der dargestellten und insoweit bevorzugten Nachspanneinrichtung 1 unten dargestellt ist. Zudem sind ein oben dargestellter Zugkörper 7 und eine sich gegenüber dem Grundkörper 5 sowie dem Zugkörper 7 abstützende Federeinrichtung 12 vorgesehen. Der Zugkörper 7 kann in der in den Fig. 3A-C dargestellten Spannstellung der Nachspanneinrichtung 1 gegenüber dem Grundkörper 5 in einer Richtung ausgezogen werden, und zwar entgegen der Richtung der Rückstellkraft RK der Federeinrichtung 12. Die Richtung der Rückstellkraft RK der Federeinrichtung 12 und die Auszugrichtung AR des Zugkörpers 7 sind mithin entgegengesetzt.

Auf eine exakte Ausrichtung dieser Richtungen kommt es funktional jedoch nicht unbedingt an, auch wenn es bevorzugt sein sollte, wenn diese beiden Richtungen exakt parallel zueinander ausgerichtet sind. Bei der dargestellten und insoweit bevorzugten Nachspanneinrichtung 1 wird die Federeinrichtung 12 durch eine einzige Schraubenfeder gebildet. Es könnten auch mehrere Federn und/oder andere Arten von Federn verwendet werden. Wesentlich ist es dabei lediglich, dass dem Ausziehen des Zugkörpers 7 gegenüber dem Grundkörper 5 eine Rückstellkraft RK entgegengesetzt wird, die soweit möglich dafür sorgen würde, dass der Zugkörper 7 wieder gegenüber dem Grundkörper 5 in die Ausgangsstellung eingezogen wird.

In diesem Zusammenhang wird ferner darauf hingewiesen, dass die Bezeichnungen Grundkörper 5 und Zugkörper 7 vorliegend ebenso wie bei vielen anderen Ausgestaltungen der Nachspanneinrichtung 1 im weitesten Sinne austauschbar wären. Mit anderen Worten wird der Grundkörper 5 ebenso gegenüber dem Zugkörper 7 ausgezogen, wie der Zugkörper 7 gegenüber dem Grundkörper 5 ausgezogen wird. Es kommt lediglich auf die dem Ausziehen zugrunde gelegte Referenz an. Bei der dargestellten und insoweit bevorzugten Nachspanneinrichtung 1 wird jedoch der dem Spannmittel 11, vorliegend der Ratsche, zugeordnete Körper als der Zugkörper 7 bezeichnet, da sich dieser beim Spannen des Gurts 9 mit dem Spannmittel 11 gegenüber dem Grundkörper 5 auszieht, wenn man das Nutzfahrzeug N als Referenz ansieht.

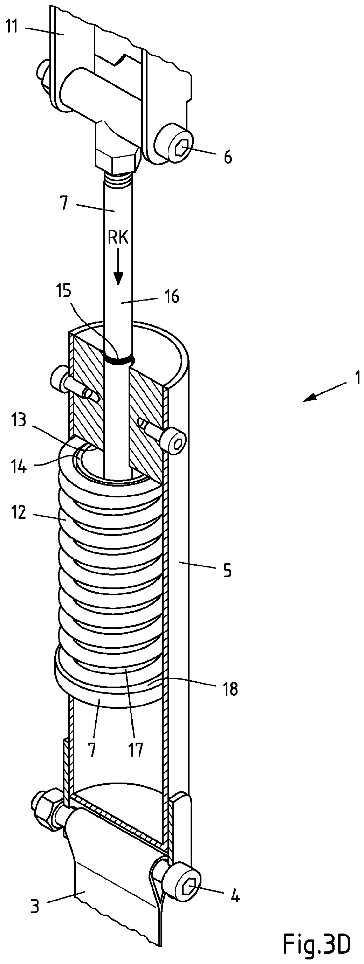

In den Fig. 3A-C ist die Nachspanneinrichtung 1 in einer Spannstellung dargestellt, aus der das nur ansatzweise dargestellte Spannmittel 11 den daran angeschlossenen Gurt entlang einer Ladung L spannen kann. Dann wird der Zugkörper 7 gegenüber dem Grundkörper 5 ausgezogen, wobei die Federeinrichtung 12 komprimiert wird und dem weiteren Ausziehen des Zugkörpers 7 eine Rückstellkraft RK entgegensetzt. Die Nachspanneinrichtung 1 kann auf diese Weise gespannt werden, bis der Zugkörper 7 so weit gegenüber dem Grundkörper 5 ausgezogen worden ist, dass ein Grundkörperanschlag 13 des Grundkörpers 5 mit einem Zugkörperanschlag 14 des Zugkörpers 7 in Anlage gelangt, wie dies in den Fig. 3D-E dargestellt ist.

Die Nachspanneinrichtung 1 wird somit zwangsweise in die in den Fig. 3D-E dargestellte Nachspannstellung verstellt, während sich die Nachspanneinrichtung 1 bei nicht vollständig ausgezogenem Zugkörper 7 stets in einer Spannstellung befunden hat. In einer Spannstellung ist es dem Zugkörper 7 möglich, entgegen der Richtung der Rückstellkraft RK gegenüber dem Grundkörper 5 ausgezogen zu werden, was in der Nachspannstellung infolge des Formschlusses durch die Anlage des Grundkörperanschlags 13 am Zugkörperanschlag 14 verhindert ist. Durch die Anlage von Grundkörperanschlag 13 und Zugkörperanschlag 14 wird eine Beschädigung der Federeinrichtung 12 ebenso verhindert, wie ein unerwünschtes weiteres Ausziehen des Zugkörpers 7 gegenüber dem Grundkörper 5 während des Transports der Ladung, die infolgedessen verrutschen könnte.

Damit der Bediener sichergehen kann, dass er die Nachspanneinrichtung 1 hinreichend gespannt hat, so dass diese in die in den Fig. 3D-E dargestellte Nachspannstellung übergegangen ist, kann eine Markierung 15 vorgesehen sein, welche das Erreichen der Nachspannstellung für den Bediener anzeigt. Bei der dargestellten und insoweit bevorzugten Nachspanneinrichtung 1 ist zu diesem Zweck eine Markierung 15 in Form eines um einen aus dem Grundkörper 5 ausziehbaren Schaft 16 angebrachten Rings vorgesehen. Wenn die der Grundkörperanschlag 13 und der Zugkörperanschlag 14 in der Nachspannstellung aneinander anliegen, ist die Markierung 15 mit den Schaft 16 des Zugkörpers 7 gerade so weit aus dem Grundkörper 5 ausgezogen, dass die Markierung 15 für den Bediener sichtbar ist und ihm auf diese Weise anzeigt, dass die Nachspannstellung erreicht ist.

Bei einer anderen Ausgestaltung der Nachspanneinrichtung könnte zusätzlich oder alternativ zu einem Formschluss ein Kraftschluss vorgesehen sein, infolgedessen der Zugkörper in der Nachspannstellung der Nachspanneinrichtung nicht weiter gegenüber dem Grundkörper ausgezogen werden kann, auch wenn dies nicht dargestellt ist. Zudem wäre es denkbar, dass der Grundkörperanschlag und der Zugkörperanschlag nicht direkt, sondern lediglich indirekt in Anlage aneinander gelangen, wenn die Nachspanneinrichtung in die Nachspannstellung verstellt ist. Dann ist wenigstens ein Zwischenkörper vorgesehen, der einerseits mit dem Grundkörperanschlag und andererseits mit dem Zugkörperanschlag in Anlage gelangt.

Bei der in den Fig. 3A-E dargestellten Nachspanneinrichtung 1 könnte dies beispielsweise vorgesehen sein, wenn der innerhalb der Federeinrichtung 12 in Form der Schraubenfeder vorgesehene Zylinderkörper 17 nicht fest mit dem Zugkörper 7 verbunden wäre. Eine feste Verbindung von Grundkörper 5 und Zylinderkörper 17 wäre nicht zwingend erforderlich, da der Zylinderkörper 17 auch dann in der Nachspannstellung in eine formschlüssige Anlage zwischen einem anderen Zugkörperanschlag 18 und einem Grundkörperanschlag 13 gelangen würde. Funktional würde sich daher nur bedingt etwas ändern, wenn der Zylinderkörper 17 ein vom Grundkörper 5 unabhängiger, separater Körper wäre. Denkbar wäre es funktional alternativ auch, dass der Zylinderkörper 17 Teil des Grundkörpers 5 wäre.

Im Übrigen ist es nicht erforderlich, dass sich die Federeinrichtung 12 in jeder Stellung der Nachspanneinrichtung 1 an dem Grundkörper 5 und dem Zugkörper 7 abstützt. In einer solchen Stellung ist dann ein Ausziehen des Zugkörpers 7 gegenüber dem Grundkörper 5 möglich, ohne dass diesem Ausziehen eine Rückstellkraft RK der Federeinrichtung 12 entgegengesetzt wird. Dies dient mithin nicht dem Spannen der Nachspanneinrichtung 1, so dass solche Stellungen in vielen Fällen als nicht bevorzugt angesehen werden können. Bei einem weiteren Verstellen wird sich jedoch auch dann die Federeinrichtung 12 gegenüber dem Grundkörper 5 und dem Zugkörper 7 abstützen und dem weiteren Ausziehen des Zugkörpers 7 gegenüber dem Grundkörper 5 eine Rückstellkraft RK entgegensetzen.

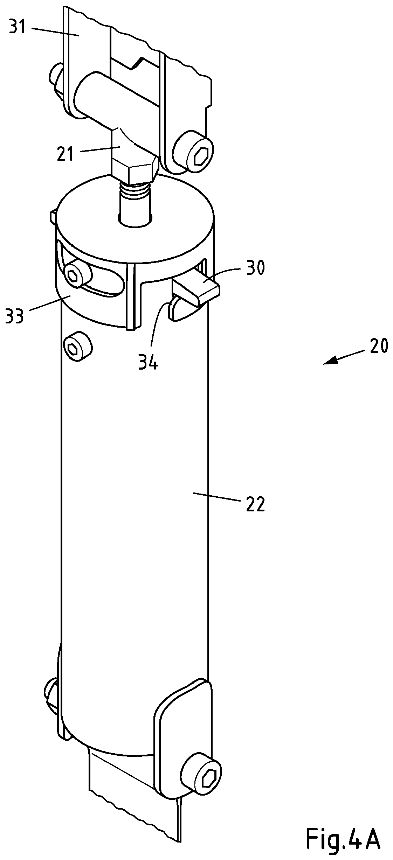

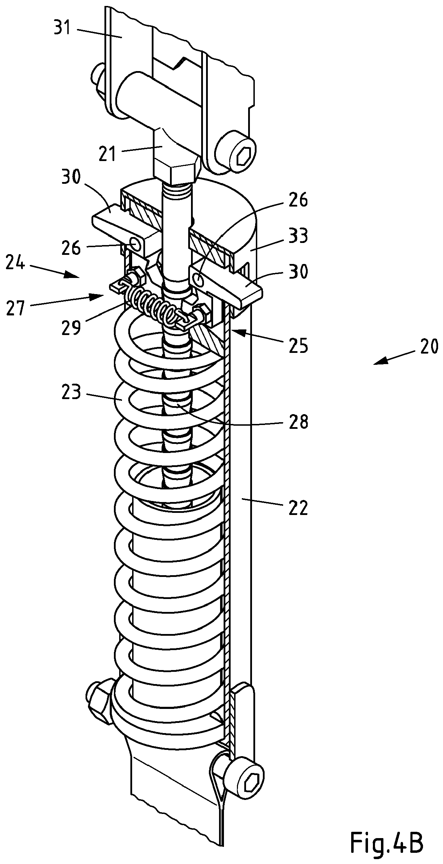

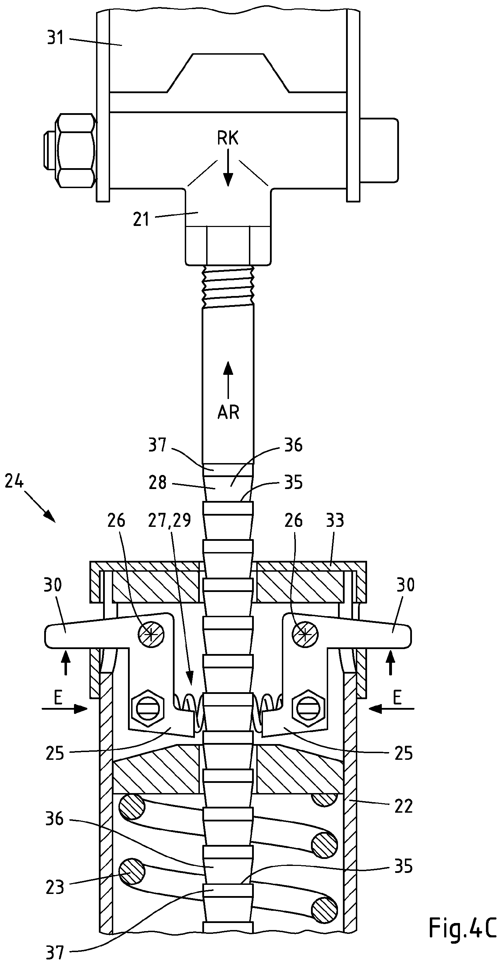

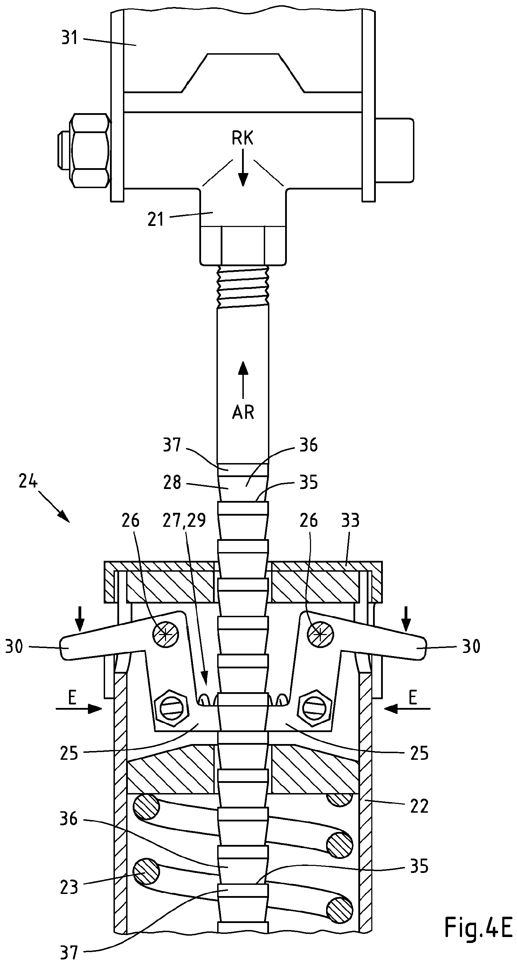

In den Fig. 4A-E ist eine alternative Ausgestaltung einer Nachspanneinrichtung 20 dargestellt. Diese Nachspanneinrichtung 20 kann wie zuvor beschrieben durch bloßes Ausziehen des Zugkörpers 21 gegenüber dem Grundkörper 22 entgegen der Richtung der Rückstellkraft RK der Federeinrichtung 23 aus einer Spannstellung in eine Nachspannstellung überführt werden. Zusätzlich weist die Nachspanneinrichtung 20 der Fig. 4A-E aber ein Gesperre 24 auf, um die Nachspanneinrichtung 20 bereits bei nicht vollständig ausgezogenem Zugkörper 21 in eine Nachspannstellung überführen zu können. Das Gesperre 24 ist gegenüber dem Grundkörper 22 räumlich festgelegt und weist zwei Nocken 25 auf. Die Nocken 25 sind schwenkbar um Schwenkachsen 26 am Grundkörper 22 gehalten und über ein Federelement 27 in einer Eingriffsrichtung E der Nocken 25 in eine Zahnstange 28 mittels einer entsprechenden Federkraft federbelastet. Das Federelement 27 ist bei der dargestellten und insoweit bevorzugten Nachspanneinrichtung durch zwei Schraubenfedern 29 gegeben, mit denen die Nocken 25 auf gegenüberliegenden Seiten miteinander verbunden sind. Die Nocken 25 sind zudem auf einer den Nocken 25 abgewandten Seite der Schwenkachsen 26 mit einem Hebelarm 30 verbunden. In den Fig. 4A-C sind die Hebelarme 30 entgegen der Federkraft des Federelements 27 nach oben geschwenkt und in dieser Stellung durch den Grundkörper 22 formschlüssig gehalten. Das Gesperre 24 befindet sich demnach in einer Freigabestellung, in der der Zugkörper 21 zum Spannen der mit dem Zugkörper 21 verbundenen Ladungssicherungsvorrichtung 31 gegenüber dem Grundkörper 22 und in einer Richtung entgegen der Rückstellkraft RK der Federeinrichtung 23 ausgezogen werden kann. Die Nocken 25 gelangen in der Freigabestellung nicht in Eingriff mit der Zahnstange 28 des Zugkörpers 21, so dass der Zugkörper 21 in der Freigabestellung auch wieder gegenüber dem Grundkörper 22 in der Richtung der Rückstellkraft RK der Federeinrichtung 23 eingezogen werden kann, wenn die durch die Ladungssicherungsvorrichtung 31 auf den Zugkörper 21 ausgeübte Zugkraft abnimmt.

Grundsätzlich sei in diesem Zusammenhang angemerkt, dass das Gesperre alternativ auch an dem Zugkörper festgelegt und die Zahnstange als Teil des Grundkörpers ausgebildet sein könnte. Das Gesperre könnte seine Funktion auch in einer solchen Ausgestaltung der Nachspanneinrichtung analog ausüben.

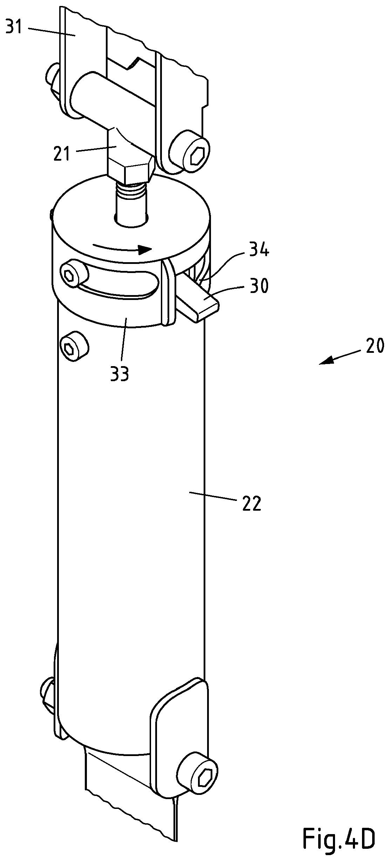

In den Fig. 4D-E ist das Gesperre 24 in eine Sperrstellung verstellt, was bei der dargestellten und insoweit bevorzugten Nachspanneinrichtung 20 durch ein Drehen eines Verstellrings 33 des Grundkörpers 22 bewirkt worden ist. Durch das Verstellen des Verstellrings 33 wird der Formschluss zwischen den Hebelarmen 30 und dem Grundkörper 22 aufgehoben und die Hebelarme 30 können um die Schwenkachse 26 nach unten schwenken. Dieses Schwenken der Hebelarme 30 wird durch die Federkraft des Federelements 27 des Gesperres 24 zwangsweise bewirkt. Dabei schwenken die Nocken 25 um die zugeordneten Schwenkachsen 26 nach innen und gelangen in Eingriff mit der Zahnstange 28 des Zugkörpers 21. Wird der Verstellring 33 des Grundkörpers in die entgegengesetzte Richtung gedreht, gleiten die Hebelarme 30 an Abschrägungen 34 des Verstellrings 33 nach oben ab und werden die Hebelarme 30 vom Verstellring 33 in dieser oberen Stellung formschlüssig gehalten. Das Gesperre 24 befindet sich dann erneut in der Freigabestellung.

Das Verstellen des Gesperres 24 zwischen der Freigabestellung und der Sperrstellung kann in unterschiedlichen weit ausgezogenen Stellungen des Zugkörpers 21 erfolgen. Je nachdem wie weit der Zugkörper 21 gegenüber dem Grundkörper 22 ausgezogen ist, greifen die Nocken 25 in unterschiedliche Zahnzwischenräume in unterschiedlichen Abschnitten der Zahnstange 28 ein. Die Nocken 25 werden durch die Federkraft in Eingriff mit der Zahnstange 28 in den entsprechenden Zahnzwischenräumen gehalten. Ein weiteres Ausziehen des Zugkörpers 21 wird so verhindert, da die Nocken 25 eine formschlüssige Verbindung mit den angrenzenden Zahnflanken 35 eingehen, wenn an dem Zugkörper 21 mit größerer Kraft gezogen wird. Die Nachspanneinrichtung 20 befindet sich mit dem Gesperre 24 in der Freigabestellung in der Spannstellung und mit dem Gesperre in der Sperrstellung in der Nachspannstellung.

Der Zugkörper 21 kann aber auch in der Nachspannstellung mit dem Gesperre 24 in der Sperrstellung gegenüber dem Grundkörper 22 weiter eingezogen werden, und zwar in der Richtung der Rückstellkraft RK der Federeinrichtung 23. Die Nocken 25 gelangen dabei in Anlage gegen andere Zahnflanken 36, die derart ausgerichtet, insbesondere angestellt, sind, dass die Nocken 25 an den Zahnflanken 36 ohne einen weiteren Eingriff des Bedieners, mithin bevorzugt zwangsweise, abgleiten können, indem die Nocken 25 um die Schwenkachse 26 entgegen der Federkraft des Federelements 27 nach außen schwenken, und so den nachfolgenden Zahn 37 passieren lassen. Der Zugkörper 21 kann mithin trotz des Gesperres 24, das sich in den Fig. 4D-E in einer Sperrstellung befindet, gegenüber dem Grundkörper 22 in der Richtung der Rückstellkraft RK der Federeinrichtung 23 eingezogen werden. Immer wenn ein Zahn 37 einen Nocken 25 passiert, gelangt der Nocken 25 in einen angrenzenden Zahnzwischenraum, in dem der Nocken 25 mit einer Zahnflanke 35 einen Formschluss bewirkt, der ein Ausziehen des Zugkörpers 21 gegenüber dem Grundkörper 22 verhindert. An einer gegenüberliegenden Zahnflanke 36 kann der Nocken 25 aber abgleiten und entgegen der Federkraft des Federelements 27 nach außen ausgelenkt werden, so dass der Zugkörper 21 zusammen mit der Zahnstange 28 gegenüber dem Grundkörper 22 eingezogen werden kann. Dabei passiert wenigstens ein Zahn 37 der Zahnstange 28 wenigstens einen Nocken 25 des Gesperres 24.

### Bezugszeichenliste

- 1: Nachspanneinrichtung
- 2: Haken
- 3: Gurt
- 4: Montageabschnitt
- 5: Grundkörper
- 6: Spannabschnitt
- 7: Zugkörper
- 8: Ladungssicherungsvorrichtung
- 9: Gurt
- 10: Haken
- 11: Spannmittel
- 12: Federeinrichtung
- 13: Grundkörperanschlag
- 14: Zugkörperanschlag
- 15: Markierung
- 16: Schaft
- 17: Zylinderkörper
- 18: Zugkörperanschlag (alternativ)
- 20: Nachspanneinrichtung
- 21: Zugkörper
- 22: Grundkörper
- 23: Federeinrichtung
- 24: Gesperre
- 25: Nocken
- 26: Schwenkachse
- 27: Federelement
- 28: Zahnstange
- 29: Schraubenfeder
- 30: Hebelarm
- 31: Ladungssicherungsvorrichtung
- 33: Verstellring
- 34: Abschrägung
- 35: Zahnflanke
- 36: Zahnflanke
- 37: Zahn
- A: Aufnahme
- AR: Auszugrichtung
- D: Dach
- E: Eingriffrichtung
- K: Kofferaufbau
- L: Ladung
- LB: Ladeboden
- N: Nutzfahrzeug
- R: Rückwand
- RT: Rückwandtür
- RK: Rückstellkraft
- SW: Seitenwand
- ST: Stirnwand
- Z: Zugfahrzeug

## Patentansprüche

1. Nachspanneinrichtung (1,20) zur Ladungssicherung an einem Nutzfahrzeug (N), insbesondere Lastkraftwagen, Anhänger oder Sattelauflieger, mit einer Ladungssicherungsvorrichtung (8,31), insbesondere Spanngurt, mit einem Grundkörper (5,22), einem Zugkörper (7,21) und einer sich wenigstens indirekt gegenüber dem Grundkörper (5,22) und den Zugkörper (7,21) abstützenden Federeinrichtung (12,23), wobei der Zugkörper (7,21) gegenüber dem Grundköper (5,22) von wenigstens einer Spannstellung der Nachspanneinrichtung (1,20) entgegen einer Richtung der Rückstellkraft (RK) der Federeinrichtung (12,23) unter Verlängerung der Nachspanneinrichtung (1,20) ausziehbar und von wenigstens einer Nachspannstellung der Nachspanneinrichtung (1,20) in Richtung der Rückstellkraft (RK) der Federeinrichtung (12,23) unter Verkürzung der Nachspanneinrichtung (1,20) zurück einziehbar vorgesehen ist,
**dadurch gekennzeichnet, dass**
der Zugkörper (7,21) in der wenigstens einen Nachspannstellung gegenüber einem weiteren Ausziehen relativ zum Grundkörper (5,22) entgegen der Richtung der Rückstellkraft (RK) der Federeinrichtung (12,23) formschlüssig und/oder kraftschlüssig gesichert ist.

2. Nachspanneinrichtung nach Anspruch 1,
**dadurch gekennzeichnet, dass**
dem Grundkörper (5,22) wenigstens ein Grundkörperanschlag (13) und dem Zugkörper (7,21) wenigstens ein korrespondierender Zugkörperanschlag (14) zugeordnet ist und dass der wenigstens eine Grundköperanschlag (13) und der wenigstens eine Zugkörperanschlag (14) in der wenigstens einen Nachspannstellung wenigstens indirekt derart in Anlage aneinander gelangen, dass ein Ausziehen des Zugkörpers (7,21) gegenüber dem Grundkörper (5,22) entgegen der Rückstellkraft (RK) der Federeinrichtung (12,23) formschlüssig blockiert ist.

3. Nachspanneinrichtung nach Anspruch 1 oder 2,
**dadurch gekennzeichnet, dass**
der Grundkörper (5,22) mit einem Montageabschnitt (4) zum Montieren der Nachspanneinrichtung (1,20) an einem Nutzfahrzeug (N) und/oder der Zugkörper (7,21) mit einem Spannabschnitt (6) zum Anbinden einer Ladungssicherungsvorrichtung (8,31) verbunden ist und dass, vorzugsweise, mit dem Montageabschnitt (4) des Grundkörpers (5,22) wenigstens indirekt ein Haken (2,10) zum Einhaken der Nachspanneinrichtung (1,20) in eine Aufnahme (A) eines Nutzfahrzeugs (N) und/oder mit dem Spannabschnitt (6) eine Ladungssicherungsvorrichtung (8,31) in Form eines Spanngurtes oder mit einer eine Spanneinrichtung aufweisenden Kette verbunden ist.

4. Nachspanneinrichtung nach einem der Ansprüche 1 bis 3,
**dadurch gekennzeichnet, dass**
ein von einer Sperrstellung in wenigstens einer Nachspannstellung in eine Freigabestellung in wenigstens einer Spannstellung und zurück verstellbares Gesperre (24) vorgesehen ist und dass, vorzugsweise, ein Ausziehen des Zugkörpers (21) gegenüber dem Grundkörper (22) unter Verlängerung der Nachspanneinrichtung (20) in der Sperrstellung formschlüssig und/oder kraftschlüssig blockiert und in der Freigabestellung freigegeben ist und dass, weiter vorzugsweise, ein Einziehen des Zugkörpers (21) gegenüber dem Grundkörper (22) unter Verkürzung der Nachspanneinrichtung (20) in der Sperrstellung und der Freigabestellung freigegeben ist.

5. Nachspanneinrichtung nach Anspruch 4,
**dadurch gekennzeichnet, dass**
das Gesperre (24) wenigstens einen Nocken (25) zum formschlüssigen und/oder kraftschlüssigen Verbinden des Grundkörpers (22) und des Zugkörpers (21) in mehreren, unterschiedliche Längen der Nachspanneinrichtung (20) definierenden Nachspannstellungen aufweist.

6. Nachspanneinrichtung nach Anspruch 4 oder 5,
**dadurch gekennzeichnet, dass**
der Zugkörper (21) oder der Grundkörper (22) eine Zahnstange (28) aufweist und dass das Gesperre (24) dazu ausgebildet ist, in unterschiedlichen Nachspannstellungen mit dem wenigstens einen Nocken (25) in jeweils unterschiedliche Zähne (37) in unterschiedlichen Abschnitten der Zahnstange (28) formschlüssig einzugreifen.

7. Nachspanneinrichtung nach einem der Ansprüche 4 bis 6,
**dadurch gekennzeichnet, dass**
das Gesperre (24) wenigstens ein Federelement (27) zum Federbelasten des wenigstens einen Nockens (25) wenigstens in einer Spannstellung und/oder wenigstens einer Nachspannstellung aufweist und dass, vorzugsweise, der wenigstens eine Nocken (25) wenigstens in der Nachspannstellung infolge der Federkraft des Federelements (27) den Grundkörper (22) und den Zugkörper (21) formschlüssig und/oder kraftschlüssig entgegen der Rückstellkraft (RK) der Federeinrichtung (23) miteinander verbindet.

8. Nachspanneinrichtung nach Anspruch 6 oder 7,
**dadurch gekennzeichnet, dass**
Zähne (37) der Zahnstange (28) derart ausgebildet und/oder ausgerichtet sind, so dass der wenigstens eine Nocken (25) beim Einziehen des Zugkörpers (21) gegenüber dem Grundkörper (22) in der Sperrstellung des Gesperres (24) und der Nachspannstellung der Nachspanneinrichtung (20) an den Zähnen (37) der Zahnstange (28) abgleitet, und dass, vorzugsweise, der wenigstens eine Nocken (25) beim Abgleiten an den Zähnen (37) der Zahnstange (28) entgegen der Federkraft des Federelements (27) des Gesperres (24) unter Freigabe der Zahnstange (28) ausgelenkt wird und nach dem Abgleiten an den Zähnen (37) der Zahnstange (28) jeweils in Richtung der Federkraft des Federelements (27) in erneuten formschlüssigen und/oder kraftschlüssigen Eingriff mit der Zahnstange (28) gelangt.

9. Verfahren zur Ladungssicherung an einem Nutzfahrzeug (N), insbesondere Lastkraftwagen, Anhänger oder Sattelauflieger, unter Verwendung einer Nachspanneinrichtung (1,20) nach einem der Ansprüche 1 bis 8,
- bei dem der Grundkörper (5,22) der Nachspanneinrichtung (1,20) direkt oder indirekt mit dem Nutzfahrzeug (N) verbunden wird,
- bei dem in der Spannstellung der Nachspanneinrichtung (1,20) eine an dem Zugkörper (7,21) festgelegte Ladungssicherungsvorrichtung (8,31) unter Sicherung einer Ladung (L) an dem Nutzfahrzeug (N) derart gespannt wird, dass der Zugkörper (7,21) gegenüber dem Grundkörper (5,22) unter Verlängerung der Nachspanneinrichtung (1,20) in einer Richtung entgegen der Rückstellkraft (RK) der Federeinrichtung (12,23) ausgezogen wird und
- bei dem die Nachspanneinrichtung (1,20) in eine Nachspannstellung gebracht wird, in der ein weiteres Ausziehen des Zugkörpers (7,21) gegenüber dem Grundkörper (5,22) unter Verlängerung der Nachspanneinrichtung (1,20) blockiert und ein Einziehen des Zugkörpers (7,21) gegenüber dem Grundkörper (5,22) unter Verkürzung der Nachspanneinrichtung (1,20) freigegeben ist.

10. Verfahren nach Anspruch 9,
- bei dem die Nachspanneinrichtung (1,20) durch bloßes Ausziehen des Zugkörpers (7,21) gegenüber dem Grundkörper (5,22) entgegen der Richtung der Rückstellkraft (RK) der Federeinrichtung (12,23) in die Nachspannstellung [BD1]gebracht wird und
- bei dem, vorzugsweise, die Nachspanneinrichtung (1,20) durch Ausziehen des Zugkörpers (7,21) gegenüber dem Grundkörper (5,22) entgegen der Richtung der Rückstellkraft (RK) der Federeinrichtung (12,23) bis zu einer wenigstens indirekten Anlage eines Grundköperanschlags (13) und eines Zugkörperanschlags (14) gebracht wird.

11. Verfahren nach Anspruch 9 oder 10,
- bei dem die Nachspanneinrichtung (20) durch Verstellen eines Gesperres (24) von der Freigabestellung in die Sperrstellung gebracht wird und
- bei dem, vorzugsweise, beim Verstellen des Gesperres (24) in die Sperrstellung wenigstens ein Nocken (25) den Grundkörper (22) und den Zugkörper (21) formschlüssig und/oder kraftschlüssig miteinander verbindet und den Zugkörper (21) gegenüber einem Ausziehen gegenüber dem Grundkörper (22) entgegen der Richtung der Rückstellkraft (RK) der Federeinrichtung (12,23) blockiert.

12. Verfahren nach Anspruch 11,
- bei dem beim Verstellen des Gesperres (24) in die Sperrstellung der wenigstens eine Nocken (25) abschnittweise formschlüssig in eine Zahnstange (28) des Zugkörpers (21) oder des Grundkörpers (22) eingreift und/oder
- bei dem das Gesperre (24) von der Sperrstellung in die Freigabestellung verstellt wird.

13. Verfahren nach Anspruch 11 oder 12,
- bei dem der wenigstens eine Nocken (25) des Gesperres (24) entgegen einer Federkraft wenigstens eines Federelements (27) von der Sperrstellung in die Freigabestellung verstellt wird und/oder
- bei dem der wenigstens eine Nocken (25) des Gesperres (24) in Richtung einer Federkraft wenigstens eines Federelements (27) von der Freigabestellung in die Sperrstellung verstellt wird.

14. Verfahren nach einem der Ansprüche 9 oder 13,
- bei dem die Ladungssicherungsvorrichtung (8,31) unter Aufhebung der Sicherung der Ladung (L) an dem Nutzfahrzeug (N) entspannt wird und
- bei dem, vorzugsweise, währenddessen der Zugkörper (7,21) unter Verkürzung der Nachspanneinrichtung (1,20) in Richtung der Rückstellkraft (RK) der Federeinrichtung (12,23) gegenüber dem Grundkörper (5,22) eingezogen wird.

15. Verfahren nach einem der Ansprüche 12 bis 14,
- bei dem der wenigstens eine Nocken (25) beim Einziehen des Zugkörpers (21) gegenüber dem Grundkörper (22) in der Sperrstellung des Gesperres (24) und der Nachspannstellung der Nachspanneinrichtung (20) an den Zähnen (37) der Zahnstange (28) abgleitet und
- bei dem, vorzugsweise, der wenigstens eine Nocken (25) beim Abgleiten an den Zähnen (37) der Zahnstange (28) entgegen der Federkraft des Federelements (27) des Gesperres (24) unter Freigabe der Zahnstange (28) ausgelenkt wird und nach dem Abgleiten an den Zähnen (37) der Zahnstange (28) jeweils in Richtung der Federkraft des Federelements (27) in erneuten formschlüssigen und/oder kraftschlüssigen Eingriff mit der Zahnstange (28) gelangt.
